# EUROPÄISCHE PATENTSCHRIFT

(11) **EP 2 958 761 B1**
(45) Veröffentlichungstag und Bekanntmachung des Hinweises auf die Patenterteilung: **15.03.2017**
(21) Anmeldenummer: 14700738.9
(22) Anmeldetag: 17.01.2014
(51) Int. Cl.: B60G 7/02, B62D 21/15

(54) **VERBINDUNGSANORDNUNG ZWISCHEN EINEM RADFÜHRENDEN LENKER EINER FAHRZEUG-RADAUFHÄNGUNG UND EINEM FLANSCH**
CONNECTION ARRANGEMENT BETWEEN A WHEEL-ARM SUSPENSION OF A VEHICLE AND A FLANGE
CONNECTION ENTRE UN BRAS DE SUSPENSION DE VÉHICULE ET UNE CHAPE.

(30) Priorität: 20.02.2013 DE 102013202791
(43) Veröffentlichungstag der Anmeldung: 30.12.2015
(73) Patentinhaber: Bayerische Motoren Werke Aktiengesellschaft, 80809 München (DE)
(72) Erfinder: KRASCHIENSKI, Olaf, 81249 Muenchen (DE); EPPELEIN, Ralph, 85375 Neufahrn (DE)
(86) Internationale Anmeldenummer: PCT/EP2014/050922
(87) Internationale Veröffentlichungsnummer: WO 2014/127936

(56) Entgegenhaltungen:
- EP-A2- 1 312 535
- DE-A1-102004 015 048
- DE-A1-102011 007 621

## Beschreibung

Die Erfindung betrifft eine Verbindungsanordnung zwischen einem radführenden Lenker einer Fahrzeug-Radaufhängung und einem Flansch eines Trägers oder dgl. über einen ein Langloch des Träger-Flansches oder des Lenkers durchdringenden Bolzen. Zum Stand der Technik wird neben der DE 10 2011 007 621 A1 auf die DE 10 2004 015 048 A1 verwiesen.

Das Dokument EP1312535 offenbart eine Verbindungsanordnung zwischen einer radführenden Lenker einer Fahrzeug-Radaufhängung und einem Flansch eines Trägers zur Freisetzung der Verbindungsanordnung bei einem Crash.
Über eine Anordnung nach dem Oberbegriff des Anspruchs 1 können radführende Lenker mit einem Achsträger oder einem Radträger, welche beide unter den hier verwendeten Begriff des Trägers fallen sollen, verbunden sein, wobei der besagte Bolzen üblicherweise durch eine Schraube gebildet ist, auf welche eine Mutter aufgebracht ist, die den Lenker und den Träger gegeneinander spannt. Üblicherweise ist in einer solchen Verbindungsanordnung ein geeignet ausgebildetes Gummilager oder Gelenk vorgesehen bzw. angeordnet. Im Falle einer Konstruktion vergleichbar der o.g. DE 10 2004 015 048 A1 mit einem zwischengeschalteten Lagerhalter wird letzterer in der Terminologe der vorliegenden Erfindung je nach detaillierter Gestaltung dem Lenker oder dem Träger zugeordnet.
Aus Sicherheitsgründen kann es erwünscht sein, dass sich insbesondere im Falle eines Fahrzeug-Crashs, ggf. jedoch auch bei andersartig verursachtem Auftreten anormaler Kräfte, was vorliegend allgemein als "fremdkraftbasiert" bezeichnet wird, eine Verbindungsanordnung nach dem Oberbegriff des Anspruchs 1 löst. Hierfür eine (weitere) günstige Gestaltung aufzuzeigen ist Aufgabe der vorliegenden Erfindung.

Die Lösung dieser Aufgabe ist für eine Verbindungsanordnung nach dem Oberbegriff des Anspruchs 1 durch eine Schneiden-Struktur gekennzeichnet, die bei Auftreten einer ausreichend hohen gegen die Wand des Langlochs gerichteten Zug- oder Druckkraft diese Wand durchtrennt und damit ein Lösen der Verbindungsanordnung ermöglicht. Vorteilhafte Aus- und Weiterbildungen sind Inhalt der Unteransprüche.

Erfindungsgemäß ist eine Schneide oder dgl., hier "Schneiden-Struktur" genannt, zum Durchtrennen oder Aufbrechen der Wand des den besagten Bolzen aufnehmenden Langlochs vorgesehen, die dann wirksam wird, wenn eine entsprechend hohe Kraft wirksam wird, bei deren Auftreten die Verbindungsanordnung gelöst werden sollte. Diese Kraft wirkt derart zunächst auf die Schneide und von dieser auf die Wand bzw. einen Abschnitt derselben, auf den die Schneide auftrifft, ein, dass die Schneide die Wand zumindest soweit schädigt, dass der Bolzen bei weiterer Krafteinwirkung in einer zumindest teilweise zur Bolzen-Längsachse senkrechten Richtung quasi seitlich aus dem Langloch hinaus gleitet, wonach der Lenker wie gewünscht vom besagten Träger getrennt ist. Die genannte Kraft kann dabei eine auf den Bolzen zumindest teilweise senkrecht zu dessen Längsachse wirkende Druckkraft sein oder eine am Lenker oder am Träger angreifende Zugkraft, die zumindest eine geringfügige Verlagerung dieser beiden Elemente gegeneinander in solcher Weise bewirkt, dass die geeignet vorgesehene Schneide oder Schneiden-Struktur in der beschriebenen Weise wirken kann. Dabei zeichnet sich eine erfindungsgemäße Schneiden-Struktur durch minimalen Bauaufwand und jedenfalls dann, wenn die Schneiden-Struktur innerhalb des Langlochs vorgesehen ist, durch vernachlässigbar geringen Bauraumbedarf aus. Unter einer Schneide oder einer Schneiden-Struktur ist dabei eine schneidende Kante oder dergleichen zu verstehen, die eine gewisse Härte besitzt und daher in der Lage ist, bei Auftreffen auf einen Gegenstand, der eine demgegenüber geringere Härte aufweist, diesen im Auftreffbereich zumindest zu schädigen. Übertragen auf den Wirkungsbereich einer erfindungsgemäßen Schneiden-Struktur an einer Verbindungsanaordnung nach dem Oberbegriff des Anspruchs 1 soll die Wand des besagten Langlochs durch ein fremdkraftbasiertes Auftreffen der Schneiden-Struktur (unter Einwirkung einer gewissen Mindestkraft) zumindest soweit geschädigt, vorzugsweise sogar aufgebrochen werden, dass der besagte Bolzen durch diese Schädigungsstelle hindurch gelangen kann, wonach diese Verbindungsanordnung wie gewünscht gelöst wird.

Es kann die Schneidenstruktur am montierten Bolzen selbst und dabei im wesentlichen innerhalb des Langlochs liegend vorgesehen sein. Alternativ kann eine geeignete Schneide oder dgl. als Schneidenstruktur an einer auf den Bolzen aufgeschraubten Schraubenmutter oder an einer Scheibe zwischen dem Flansch oder dem Lenker und der besagten Schraubenmutter oder an einem Schraubenkopf des Bolzens vorgesehen sein, wobei die Schneidenstruktur vorzugsweise jeweils geeignet in das besagte Langloch hineinreicht, derart, dass die Schneidenstruktur nach zumindest geringfügiger fremdkraftbasierter Verlagerung auf einen Wandabschnitt dieses Langlochs auftreffen kann. Dabei kann eine Verdrehsicherung am die besagte Schneidenstruktur tragenden Element (bspw. an einer o.g. Scheibe) dafür sorgen, dass die Schneide im montieren Zustand in die gewünschte Richtung orientiert ist. Letzteres ist nicht erforderlich, wenn die Schneidenstruktur im Langloch selbst an einem dieses umgebenden Wandabschnitt gehalten oder abgestützt ist, bspw. über einen schmalen Steg, der bei entsprechender fremdkraftbasierten Verlagerung des Lenkers oder Trägers bricht, indem dabei der Bolzen auf dieser Schneidenstruktur auftrifft und diese daraufhin dort gegen die Wand des Langlochs drückt, wo diese Wand aufgebrochen werden soll.

Zur Förderung des Aufbrechens der das Langloch umgebenden Wand im Falle eines fremdkraftbasierten Auftreffens der Schneide kann in dieser Wand eine geeignete Sollbruchstelle vorgesehen sein, welche dem Aufbrechen oder Durchbrechen des von der auftreffenden Schneidenstruktur belastenden Wandabschnitts förderlich ist. Beispielsweise kann eine solche Sollbruchstelle in Form einer lokalen Schwächung des besagten Wandabschnitts oder eines in diesem vorgesehenen Schlitzes ausgeführt sein; es ist aber auch möglich, den unter entsprechender Fremdkraft-Einwirkung aufzubrechenden Abschnitt der das besagte Langloch umgebenden Wand in einer zum anderen Wand-Bereich des Langlochs benachbarten Ebene vorzusehen, so dass in der das Langloch umgebenden Wand quasi eine Stufe gebildet ist. Eine solche oder andersartig gebildete Stufe kann im übrigen auch im engeren oder weiteren Auflagebereich eines Schraubenkopfes des Bolzens oder einer auf diesen aufgeschraubten Schraubenmutter und der Wand des Träger-Flansches oder Lenkers als sog. Abgleitstufe vorgesehen sein, welche eine zumindest geringfügige Verlagerung der Schneidenstruktur bei Auftreten einer ausreichend hohen Zug- oder Druckkraft unterstützt, indem am Bolzen nach fremdkraftbasiertem Zurücklegen einer geringen Wegstrecke zumindest eine reduzierte oder überhaupt keine Spannkraft wirkt. Dies geht besonders deutlich aus dem ersten der im weiteren erläuterten Ausführungsbeispiele hervor.

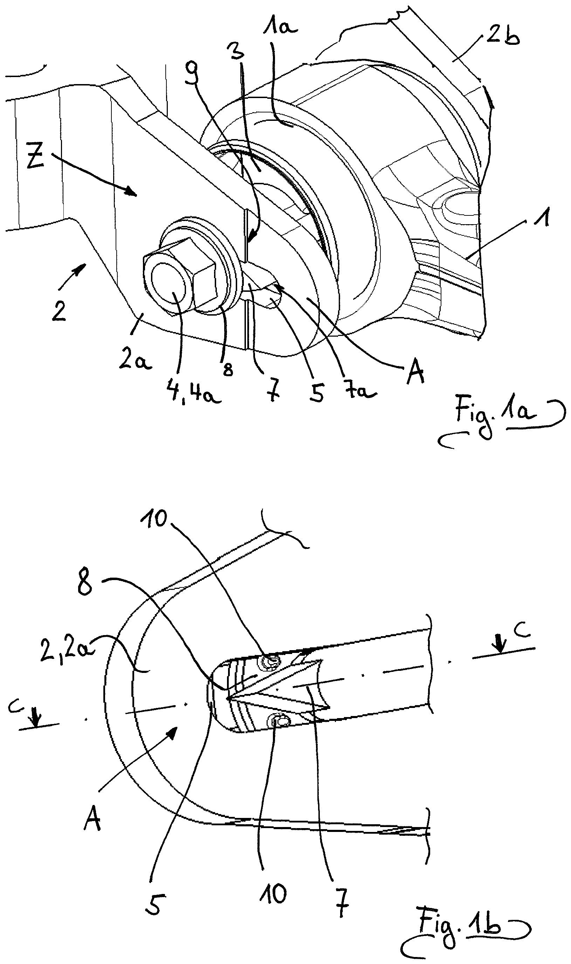

Die beigefügten Prinzipskizzen zeigen auf das wesentliche abstrahiert Ausführungsbeispiele der vorliegenden Erfindung, und zwar zeigt
- Fig.1a: eine erste Ausführungsform in räumlicher Darstellung (mit Blick von außen)

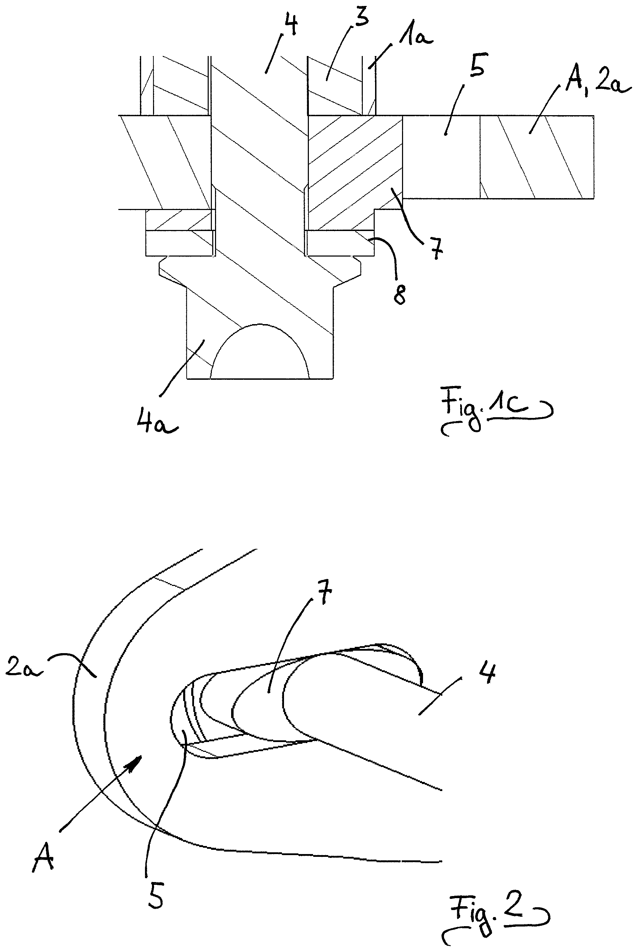

- Fig.1 b: diese erste Ausführungsform in Ansicht von innen
- Fig.1 c: den Schnitt C-C aus Fig.1 b
- Fig.2: eine zweite Ausführungsform in einer Ansicht analog Fig.1 b
- Fig.3a: eine dritte Ausführungsform in einer Ansicht analog Fig.1 a
- Fig.3b: die dritte Ausführungsform in einem Schnitt analog Fig.1 c
- Fig.4: eine vierte Ausführungsform in einer Ansicht analog Fig.1a.
Stets sind gleiche Elemente mit den gleichen Bezugsziffern gekennzeichnet.

So trägt ein radführender Lenker in der Radaufhängung eines insbesondere zweispurigen Fahrzeugs die Bezugsziffer 1 (vgl. zunächst das erste Ausführungsbeispiel und von diesem die **Fig.1a**) und ein Träger oder ein Träger-Flansch, an welchem der Lenker 1 über eine erfindungsgemäße Verbindungsanordnung zumindest geringfügig verschwenkbar befestigt ist, die Bezugsziffer 2. Die besagte Verschwenkbarkeit ist dabei durch ein Gummilager 3 oder dgl. dargestellt, welches vorliegend in einem Lagerauge 1 a des Lenkers 1 eingesetzt ist und in grundsätzlich üblicher Weise von einem Schrauben-Bolzen 4 durchdrungen wird, der eine einschnittige oder zweischnittige Verbindung zwischen dem Lenker 1 und dem Träger 2 herstellt. Dementsprechend kann das Lenkerauge 1a zwischen zwei Lagerlaschen 2a, 2b des Trägers/Träger-Flansches 2 liegend angeordnet und damit der Lenker 1 am Träger 2 befestigt sein oder es kann der Lenker 1 mit seinem Lenkerauge 1 a an nur einer solchen Lagerlasche oder dem Träger-Flansch 2 anliegend an diesem Träger bzw. Träger-Flansch 2 befestigt sein. Diese Befestigung ist durch einen Schraubenbolzen 4 dargestellt, der durch Langlöcher 5 in den Lagerlaschen 2a, 2b hindurchgeführt ist, wobei der Schrauben-Bolzen 4 mit seinem Schraubenkopf 4a auf der einen Lagerlasche 2a außenseitig aufliegt und gegenüberliegend auf der Außenseite der anderen Lagerlasche 2b aufliegend eine Schraubenmutter (nicht dargestellt) auf den Schrauben-Bolzen 4 aufgeschraubt ist. Im Falle einer einschnittigen Anbindung ist selbstverständlich nur ein Langloch 5 vorhanden und es sei darauf hingewiesen, dass im Falle einer zweischnittigen Anbindung keineswegs die beiden Langlöcher in den beiden Lagerlaschen 2a, 2b gleich dimensioniert sein müssen.

Innerhalb des hier sichtbaren Langlochs 5 in der Lagerlasche 2a erkennt man eine Schneidenstruktur 7, die an einer zwischen dem Schraubenkopf 4a und der Außenseite der Lagerlasche 2a liegenden Scheibe 8, durch die der Schrauben-Bolzen 4 hindurch geführt ist, angeformt ist. Dabei ist die eigentliche Schneide 7a dieser Schneidenstruktur 7, welche als SchneidKante fungiert und hier auch in Form einer Kante ausgebildet ist, zur in der **Figur 1a** rechtsseitigen oder vorderen "Stirnseite" des Langlochs 5 hin gerichtet, d.h. auf denjenigen Abschnitt A der das Langloch 5 umgebenden Wand des Träger-Flansches 2 ausgerichtet, der von der Längsachse des Schrauben-Bolzens 4 am weitesten entfernt ist. Dabei sind das Langloch 5 und somit auch die Schneidenstruktur 7 solchermaßen orientiert, dass die längere Halbachse des Langlochs 5 in Richtung einer möglichen Zugkraft Z verläuft, die im Falle eines Aufpralls des Fahrzeugs auf ein Hindernis (= "Crash") zwischen dem Lenker 1 und dem Träger 2 wirkt. Diese Zugkraft Z kann im wesentlichen in Längsrichtung des Lenkers 1 verlaufen und somit vorliegend senkrecht zur Achse des Schrauben-Bolzens 4 bei im wesentlichen horizontal ausgerichteter Lagerlasche 2a (oder horizontal liegendem Langloch 5) im wesentlich in Horizontalrichtung solchermaßen wirken, dass der Schrauben-Bolzen 4 mit der Schneidenstruktur 7 zum besagten Wand-Abschnitt A hin verlagert wird.

Wenn somit im Falle eines Aufpralls des Fahrzeugs auf ein Hindernis fremdkraftbasiert auf den Lenker 1 eine derart hohe Zugkraft Z einwirkt, dass hierdurch der Lenker 1 einschließlich des Schrauben-Bolzens 4 und der Scheibe 8 mit der Schneidenstruktur 7 in Richtung dieser Zugkraft Z gegenüber den Lagerlaschen 2a, 2b geringfügig verlagert wird, trifft schließlich die Schneidenstruktur 7 auf die das Langloch 5 umgebende Wand im in den Figuren 1a, 3a, 4a rechtliegenden Endbereich (= Abschnitt A) auf und bricht damit diese entweder auf oder beschädigt diese zumindest soweit, dass sich mit einer geringfügigen weiteren fremdkraftbasierten Verlagerung des Lenkers 1 gemäß Pfeilrichtung Z der Schrauben-Bolzen 4 aus dem Langloch 5 und somit aus der oder den Lagerlaschen 2a, 2b "befreien" kann, womit die gezeigte Verbindungsanordnung aufgelöst ist. Dies ist erwünscht, um eine durch den Aufprall auf ein Hindernis ("Crash") verursachte Verlagerung des vom Lenker 1 geführten Rades in eine unerwünschte Richtung zu vermeiden.
**Fig**.**1a** zeigt ein weiteres Merkmal, nämlich dass im hier weiteren erst nach einer geringfügigen Verlagerung des Schrauben-Bolzens 4 in Pfeilrichtung Z wirksam werdenden Auflagebereich des Schraubenkopfes 4a des Bolzens 4 an und in der Wand des Träger-Flansches 2 eine Abgleitstufe 9 vorgesehen ist, welche eine weitere Verlagerung der Schneidenstruktur 7 bei Auftreten einer ausreichend hohen Zug- oder Druckkraft unterstützt, indem nach fremdkraftbasiertem Zurücklegen einer geringen Wegstrecke mit Erreichen dieser Abgleitstufe 9 am Bolzen 4 zumindest eine reduzierte oder überhaupt keine Spannkraft wirkt. Eine solche Abgleitstufe 9 ist hier durch eine in Richtung der Längsachse des Schrauben-Bolzens 8 gemessen geringere Dicke der Wand des Träger-Flansches 2 bzw. der Lagerlasche 2a (und/oder 2b) desselben dargestellt.
**Fig.1b****,** die eine Ansicht von innen, d.h. vom Lenker 1 aus betrachtet auf die innerhalb des Langlochs 5 im Träger-Flansch 2 liegende Schneidenstruktur 7 einschließlich Langloch 5 zeigt, zeigt ein weiteres Merkmal, nämlich zwei an der bereits genannten Scheibe 8, an welcher diese Schneidenstruktur 7 quasi aufgehängt ist, vorgesehene Verdrehsicherungen 10, die ebenfalls in das Langloch 5 an dessen Seitenkanten hineinragen und verhindern, dass die Schneidenstruktur 7 beim Festziehen des Schrauben-Bolzens 4, d.h. beim Zusammenbau der erfindungsgemäßen Verbindungsanordnung in eine unerwünschte Richtung verdreht wird bzw. sich in eine nicht gewünschte Richtung ausrichtet. Ferner ist aus **Fig.1b** der Verlauf des in **Fig.1c** dargestellten Schnitts C-C entnehmbar.

Wie das zweite Ausführungsbeispiel in **Fig.2** in einer Ansicht analog der Fig.1b dargestellte Ausführungsbeispiel zeigt, muß die Schneidenstruktur 7 keine spitz (in Form einer Kante) zulaufende Schneide (Bezugsziffer 7a in Fig.1 b) aufweisen, sondern kann im Bereich der Schneide (7a) auch elliptisch geformt sein. Weiterhin ist bei diesem Ausführungsbeispiel die Schneidenstruktur 7 ein Bestandteil des entsprechend gestalteten Schrauben-Bolzens 4, d.h. die Schneidenstruktur 7 ist an geeigneter Stelle an den Schaft des Bolzens 4 angeformt.

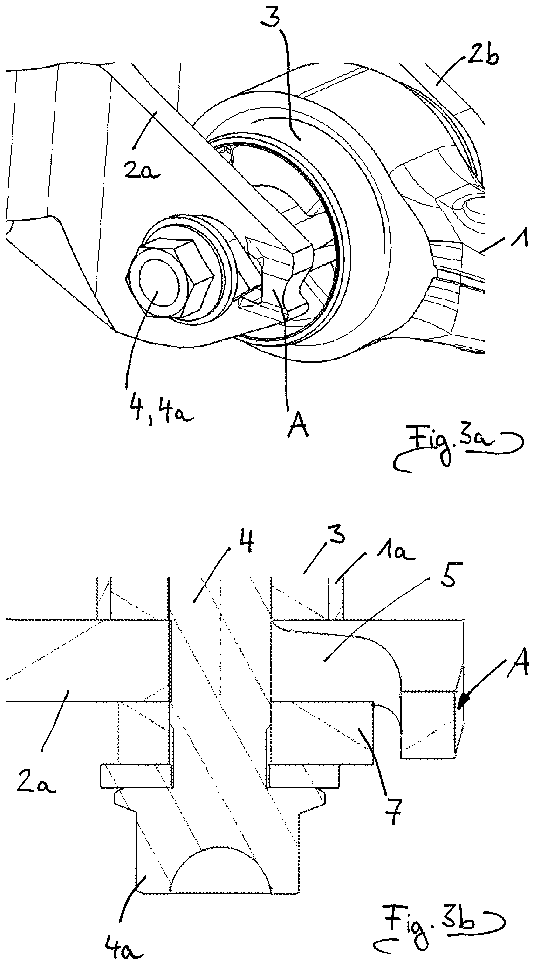

Beim Ausführungsbeispiel nach den **Figuren 3a, 3b** ist eine Sollbruchstelle im unter der besagten Fremdkraft-Einwirkung von der Schneidenstruktur 7 aufzubrechenden Abschnitt A der das Langloch 5 umgebenden Wand vorgesehen, wobei dieser Wand-Abschnitt A in einer zum anderen Wand-Bereich des Langlochs 5 benachbarten Ebene liegt (vgl. insbesondere Fig.3b), so dass (abermals) in der das Langloch 5 umgebenden Wand quasi eine Stufe gebildet ist. Mit einer solchen oder ähnlichen Struktur kann einfacher ein gewünschtes Aufbrechen nach bereits geringfügiger Verlagerung des Schrauben-Bolzens 4 bzw. von Träger-Flansch 2 und Lenker 1 relativ zueinander dargestellt werden.

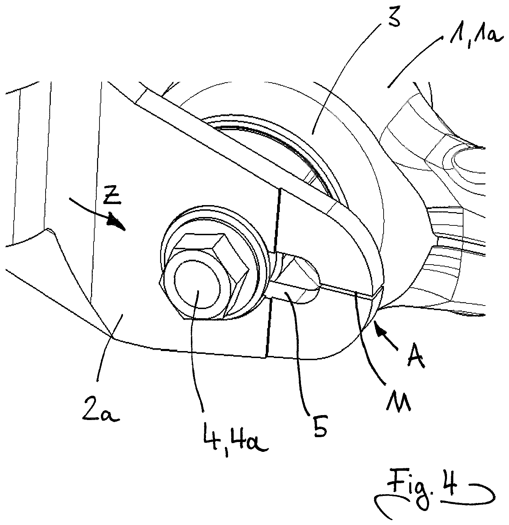

Schließlich zeigt auch das Ausführungsbeispiel von **Fig.4** eine "vorbereitete" Sollbruchstelle im von der Schneidenstruktur 7 fremdkraftbasiert aufzubrechenden Wand-Abschnitt A in Form einer lokalen Schwächung des besagten Wandabschnitts A, welche Schwächung hier in Form eines in diesem Wand-Abschnitt A vorgesehenen Schlitzes 11 ausgeführt ist, der im wesentlichen in Richtung der Zugkraft Z (= Fremdkraft) verläuft. Dabei ist dieser Darstellung die Schneidenstruktur (7) nicht sichtbar, was zwei Gründe haben kann, nämlich dass die Schneidenstruktur (7) aufgrund der Sollbruchstelle (= Schlitz 11) wesentlich kleiner ausgebildet ist (und daher vom Schraubenkopf 4a verdeckt wird), oder dass aufgrund des Schlitzes 11 der Schaft des Schrauben-Bolzens 4 selbst als Schneidenstruktur (7) wirkt und daher überhaupt keine speziell ausgeprägte Schneidenstruktur (7) vorgesehen ist.

## Patentansprüche

1. Verbindungsanordnung zwischen einem radführenden Lenker (1) einer Fahrzeug-Radaufhängung und einem Flansch (2) eines Trägers (2) oder dgl. über einen ein Langloch (5) des Träger-Flansches (2, 2a) oder des Lenkers (1) durchdringenden Bolzen (4),
**gekennzeichnet durch** eine Schneidenstruktur (7), die bei Auftreten einer ausreichend hohen gegen die Wand (A) des Langlochs (5) gerichteten Zug- oder Druckkraft diese Wand (A) durchtrennt und damit ein Lösen der Verbindungsanordnung ermöglicht.

2. Verbindungsanordnung nach Anspruch 1, **dadurch gekennzeichnet, dass** die Schneidenstruktur (7) am Bolzen (4) oder an einer auf diesen aufgeschraubten Schraubenmutter oder an einer Scheibe (8) zwischen dem Flansch (2, 2a) oder dem Lenker (1) und der besagten Schraubenmutter oder einem Schraubenkopf (4a) des Bolzens (4) vorgesehen ist oder im Langloch (5) an einem Wandabschnitt desselben gehalten ist.

3. Verbindungsanordnung nach Anspruch 1 oder 2, **dadurch gekennzeichnet, dass** in der Wand (A) des Langlochs (5) eine Sollbruchstelle für die auftreffende Schneidenstruktur (7) vorgesehen ist.

4. Verbindungsanordnung nach einem der vorangegangenen Ansprüche, **dadurch gekennzeichnet, dass** im engeren oder weiteren Auflagebereich eines Schraubenkopfes (4a) des Bolzens (4) oder einer auf diesen aufgeschraubten Schraubenmutter und der Wand des Träger-Flansches (2) oder Lenkers (1) eine Abgleitstufe (9) oder dgl. vorgesehen ist, welche eine Verlagerung der Schneidenstruktur (7) bei Auftreten einer ausreichend hohen Zug- oder Druckkraft (Z) unterstützt.

## Claims

1. A connecting arrangement between a wheel-guiding link (1) of a vehicle wheel suspension and a flange (2) of a carrier (2) or the like by a bolt (4) which passes through a slot (5) in the carrier flange (2, 2a) or in the link (1), **characterised by** a cutting structure (7) which, during the occurrence of a sufficiently high tensile force or compressive force directed against the wall (A) of the slot (5), cuts through this wall (A) and thereby allows the connecting arrangement to be released.

2. A connecting arrangement according to claim 1, **characterised in that** the cutting structure (7) is provided on the bolt (4) or on a screw nut, screwed onto this bolt, or on a disc (8) between the flange (2, 2a) or the link (1) and said screw nut or a screw head (4a) of the bolt (4) or is held in the slot (5) on a wall portion of said slot.

3. A connecting arrangement according to claim 1 or claim 2, **characterised in that** a predetermined breaking point for the impacting cutting structure (7) is provided in the wall (A) of the slot (5).

4. A connecting arrangement according to any one of the preceding claims, **characterised in that** provided in the relatively narrow or relatively wide contact region of a screw head (4a) of the bolt (4) or of a screw nut screwed onto this bolt and the wall of the carrier flange (2) or link (1) is a slide step (9) or the like which facilitates a displacement of the cutting structure (7) during the occurrence of a sufficiently high tensile force or compressive force (Z).

## Revendications

1. Dispositif de liaison entre un bras support de roue (1) d'une suspension de roue de véhicule et une bride (2a) d'un support (2) ou similaire par l'intermédiaire d'un boulon (4) traversant un trou oblong (5) de la bride du support (2, 2a) ou du bras (1),
**caractérisé par**
une structure tranchante (7) qui, lors de l'apparition d'une force de traction ou de compression suffisamment élevée dirigée contre la paroi (A) du trou oblong (5) sectionne cette paroi (A) et permet ainsi un desserrage du dispositif de liaison.

2. Dispositif de liaison conforme à la revendication 1,
**caractérisé en ce que**
la structure tranchante (7) est prévue sur le boulon (4) ou sur un écrou fileté vissé sur celui-ci, ou sur un disque (8) situé entre la bride (2, 2a) ou le bras (1) et l'écrou fileté ou la tête (4a) du boulon (4) ou est maintenue sur un segment de paroi du trou oblong (5).

3. Dispositif de liaison conforme à la revendication 1 ou 2,
**caractérisé en ce que**
dans la paroi (A) du trou oblong (5) est prévu un emplacement de rupture de consigne pour la structure tranchante (7).

4. Dispositif de liaison conforme à l'une des revendications précédentes,
**caractérisé en ce que**
dans une zone d'appui plus étroite ou plus large de la tête (4a) du boulon (4) ou d'un écrou fileté vissé sur celui-ci, et la paroi de la bride support (2) ou du bras (1) est prévu un gradin de glissement (9) ou similaire qui facilite un déplacement de la structure tranchante (7) lors de l'apparition d'une force de traction ou de compression (Z) suffisamment élevée.
